# EUROPÄISCHE PATENTANMELDUNG

(11) **EP 2 357 111 A2**
(43) Veröffentlichungstag der Anmeldung: **17.08.2011**
(21) Anmeldenummer: 11000799.4
(22) Anmeldetag: 02.02.2011
(51) Int. Cl.: B60S 1/52

(54) **Düsenanordnung für ein Kraftfahrzeug**

(30) Priorität: 03.02.2010 DE 202010001822 U
(71) Anmelder: Rehau AG & Co, 95111 Rehau (DE)
(72) Erfinder: Kasack, Daniel, 95145 Oberkotzau (DE); Lehmann, Rudolf, 95111 Rehau (DE); Zielke, Peter, 08626 Adorf (DE); Steeg, Claus-Christian, 09606 Oelsnitz (DE); Hofmann, Jürgen, 34212 Melzungen (DE)

(57) **Zusammenfassung**

Die Erfindung betrifft eine Düsenanordnung (1) für ein Kraftfahrzeug (2) mit mindestens zwei Düsen (3) zur Applikation von Wischfluiden (4) auf eine Scheibe (5) des Kraftfahrzeugs (1), wobei die Düsen (3) so zueinander angeordnet sind, dass die die Düsen (3) verlassenden Strahlen (6) des Wischtluids (4) jeweils innerhalb zueinander im Wesentlichen parallel ausgerichteter Ebenen liegen, so dass alle Strahlen (6) in Richtung zur Fahrzeug-Längserstreckung (X) auf die Scheibe (5) ausrichtbar sind. Ferner Teil der Erfindung ist ein Kraftfahrzeug (2) mit einer entsprechenden Düsenanordnung (1)

## Beschreibung

Die vorliegende Erfindung betrifft eine Düsenanordnung für ein Kraftfahrzeug mit mindestens zwei Düsen zur Applikation von Wischfluiden auf eine Scheibe des Kraftfahrzeugs.

Aus dem Stand der Technik ist bekannt gattungsgemäße Düsen so anzuordnen, dass die die Düsen verlassenden Strahlen des Wischfluids in einem Winkel zueinander (Spritzwinkel) auf eine Scheibe aufgebracht werden. Nachteilig ist dabei, dass bei hohen Geschwindigkeiten des Fahrzeuges, aufgrund des entstehenden Fahrtwindes, die Strahlen abgelenkt und der Strahlverlauf des Wischfluids gestaucht wird. In Folge dessen wird die Scheibe nicht länger glelchmäßig mit dem Wischfluid benetzt. Dies hat weiterhin zur Folge, dass der Wischergummi des Scheibenwischers über noch trockene Stellen der Scheibe läuft und erhöhtem Verschleiß unterworfen ist. Innerhalb der ersten Wischbewegungen kommt es zudem zu einer Sichtbehinderung durch Streifen- und Schlierenbildung auf der Scheibe. Darüber hinaus wird die Scheibe nur noch dort vollständig gereinigt, wo das Wischfluid auf die Scheibe trifft. Nachteilig ist ferner, dass sich durch die Ablenkung der Strahlen des Wischfluids die Auftreffpunkte auf der Scheibe soweit verändern können, dass diese in das sog. A-Sichtfeld bzw. den A-Sichtbereich (gemäß ECE R-43 in der Revision 2 in Anhang 18) der Scheibe kommen und dort die Sicht des Kraftfahrzeugführers stark beeinträchtigen.

Die DE 33 03 224 A1 beschreibt eine Düsenanordnung für ein Kraftfahrzeug bei der vorgesehen ist, die Düsen in den Wischerarmen des Scheibenwischers zu integrieren, so dass es durch die unmittelbare Applikation des Wischfluids vor dem Scheibenwischergummi zu keiner Beeinträchtigung des Sichtfeldes des Fahrers und gleichzeitig zu einer Verbesserung des Verschleißverhaltens des Scheibenwischergummis kommt. Nachteilig bei dieser Anordnung ist jedoch, dass die Düsen durch die exponierte Lage des Scheibenwischerarms an dem Fahrzeug der Witterung direkt ausgesetzt sind und insbesondere die Gefahr des Einfrierens der Düsen stark erhöht ist. Zudem ist die technische Umsetzung durch die Integration der Düsen in den sich bewegenden Wischerarm vergleichsweise kompliziert und mit einem erhöhten Kostenaufwand verbunden. Um ein Einfrieren der Düsen zu verhindern bzw. um diese auftauen zu können ist zudem zwingend eine separate Heizung der Düsen nötig.

Die Erfindung stellt sich daher die Aufgabe eine Düsenanordnung mit den eingangs beschriebenen Merkmalen anzugeben, die gegenüber dem Stand der Technik eine zumindest im Wesentlichen von der Fahrzeuggeschwindigkeit unabhängige Applikation von Wischfluiden auf die Scheibe eines Kraftfahrzeuges zu ermöglichen und zudem kostengünstig realisiert werden kann.

Erfindungsgemäß wird diese Aufgabe dadurch gelöst, dass die Düsen so zueinander angeordnet sind, dass die die Düsen verlassenden Strahlen des Wischfluids jeweils innerhalb zueinander im Wesentlichen parallel ausgerichteter Ebenen liegen, so dass alle Strahlen in Richtung zur Fahrzeug-Längserstreckung auf die Scheibe ausrichtbar sind.

Durch die erfindungsgemäße Ausrichtung der Düsen verkürzt sich die Wurfweite der Strahlen, d.h. deren Wegstrecke vom Verlassen der Düse bis zu deren Auftreffpunkt auf der Scheibe. Durch die Ausrichtung der Strahlen zur Fahrzeug-Längserstreckungsrichtung wird vorteilhaft der Einfluss der Fahrgeschwindigkeit bzw. des Fahrtwindes (aerodynamischer Einfluss) auf die Strahlen, und somit deren Ablenkung minimiert. In vorteilhafter Weise ist gewährleistet, dass die Applikation des Wischfluids auf die Scheibe gleichmäßig und weitgehend unabhängig von der Geschwindigkeit des Fahrzeuges erfolgt. Erfindungsgemäß können durch die Minimierung der Ablenkung der Strahlen zudem diverse Sensoren (Regensensor, Helligkeitssensor, etc.) im Bereich der Scheibe gezielt gereinigt werden, was bislang nur indirekt über die von dem Wischerarm verteilten Wischfluide möglich war. Die Richtungsabweichung der Strahlen bezüglich der Fahrzeug-Längserstreckung weist einen Wert von t 5°, vorzugsweise ± 3° weiter bevorzugt von ± 1° auf. Die Scheibe des Fahrzeuges kann als eine Frontscheibe und/oder als eine Heckscheibe ausgebildet sein.

Die Düsen können entlang einer sich im Wesentlichen quer zur Fahrzeug-Längserstreckung erstreckenden Linie über eine Fluidleitung verbunden sein und eine Fluidleitungs-Düsenkette bilden. Die Düsen sind innerhalb dieser Fluidleitungs-Düsenkette so angeordnet, dass sich jeweils eine Düse und ein daran anschließendes Fluidleitungssegment entlang dieser Fluidleitungs-Düsenkette abwechseln. Die Länge der Fluidleitungssegmente zwischen den einzelnen Düsen kann dabei variieren, kann aber auch einen im Wesentlichen gleichen Wert aufweisen. Die Auftreffposition auf der Scheibe quer zur Fahrzeug-Längserstreckung wird somit durch die Platzierung der Düse, d.h. durch die Anordnung der Düse innerhalb der Fluidleitungs-Düsenkette, realisiert. Im Vergleich zu einer Wischfluidversorgung der Düsen durch jeweils eine einzelne Fluidleitung kann somit die Zahl der nötigen Fluidleitungen reduziert werden.

Vorzugsweise ist innerhalb der Fluldleltungs-Düsenkette ein Heizelement angeordnet. Das Heizelement ist dabei vorzugsweise als ein drahtförmiges Widerstandsheizelement ausgebildet. Durch den Aufbau einer Fluidleitungs-Düsenkette ist es in einfacher Weise möglich, ein derartiges Heizelement innerhalb dieser Fluidleitungs-Düsenkette anzuordnen.

Die Düsen können ferner so zueinander ausgerichtet sein, dass die die Düsen verlassenden Stahle einen Winkel zueinander einschließen, so dass die jeweiligen Auftreffpunkte der Strahlen auf der Scheibe in der Fahrzeug-Höhenerstreckung voneinander abweichen. Die Düsen bzw. die die Düsen verlassenden Strahlen sind dabei in Richtung der Fahrzeug-Höhenerstreckung gegenüber der Horizontalen gegeneinander verkippt, so dass die jeweiligen Auftreffpunkte der Strahlen des Wischfluids auf der Scheibe voneinander abweichen. Durch die vorteilhafte Variation der Auftreffpunkte in der Fahrzeug-Höhenerstreckung können die Auftreffpunkte des Wischfluids, und somit die Applikation des Wischfluids, an den jeweiligen Wischbereich des Scheibenwischers des Fahrzeugs angepasst werden. Vorzugsweise erfolgt die horizontale Winkelausrichtung der Düsen zueinander durch den Einsatz von Exzenterringen, welche eine Drehbewegung an dem jeweiligen Exzenterring in eine Winkeländerung der Düsen bzw. der Düsenköpfe umsetzen. Als Drehachse kann dabei die Fluidleitungs-Düsenkette selbst fungieren. Diese kann dabei in dem Düsenkörper entsprechend gelagert sein.

Vorzugsweise sind die Düsen jeweils innerhalb einer Abzweigung einer die Düsen mit Wischfluid versorgenden Fluidleitung angeordnet. Die Abzweigung kann dabei als T-Stück ausgebildet sein, kann aber auch einstückig zusammen mit der Fluidleitung gebildet sein. Aufgrund der örtlichen Nähe der Düse zu einem innerhalb der Fluidleitung vorgesehenen Heizelement kann eine ausreichende Wärmemenge zum Auftauen der Düsen bereitgestellt werden. Vorteilhaft kann auf eine zusätzliche Beheizung des Düsenkörpers selbst verzichtet werden.

Innerhalb der Düsenanordnung können drei bis neun, vorzugsweise fünf bis sieben, weiter vorzugsweise sechs Düsen vorgesehen sein. Durch das Vorsehen einer Vielzahl von Düsen ist gewährleistet, dass das Wischfluid sehr gleichmäßig auf die Scheibe appliziert werden kann. Der Abstand zwischen benachbarten Düsen nimmt dabei vorzugsweise einen Wert zwischen 10 bis 50 cm, weiter vorzugsweise von 20 cm bis 40 cm, bevorzugt von 25 cm bis 35 cm ein.

Vorteilhaft sind die Düsen als Punktstrahldüsen und/oder Kugelstrahldüsen und/oder Fluiddüsen ausgebildet

Bei einem Kraftfahrzeug mit einer erfindungsgemäßem Düsenanordnung können die Düsen mittels eines Halters oder mittels einer Halteschiene oder an einer Wasserkastenabdeckung oder direkt an der Karosserie mit dem Kraftfahrzeug verbunden sein. Durch den erfindungsgemäßen Aufbau einer flexiblen Fluidleitungs-Düsenkette kann die Düsenanordnung vorteilhafterweise sehr flexibel an den jeweiligen Einbauort am Kraftfahrzeug angepasst werden.

Die Erfindung betrifft ferner ein Kraftfahrzeug mit einer efindungsgemäßen Düsenanordnung, wobei die Düsen so angeordnet sind, dass die Auftreffpunkte der Strahlen außerhalb eines A-Sichtbereichs, also dem Hauptsichtfeld des Fahrers, der Scheibe liegen. Der A-Sichtbereich ist in Anhang 18 der ECE R-43 (Regelung 43 in der Revision 2: "Einheitliche Bedingungen für die Genehmigung der Sicherheitsverglasungswerkstoffe und ihres Einbaus in Fahrzeugen") definiert.

### Ausführungsbeispiele

Im Folgenden wird die Erfindung anhand einer lediglich ein Ausführungsbeispiel darstellenden Zeichnung erläutert. Es zeigen schematisch:
- Fig. 1: eine Draufsicht auf ein Kraftfahrzeug mit einer erfindungsgemäßen Düsenanordnung
- Fig. 2: eine Frontalansicht auf eine Scheibe eines Kraftfahrzeugs mit einer Düsenanordnung gemäß des Stands der Technik
- Fig. 3: eine Frontalansicht auf eine Scheibe eines Kraftfahrzeugs mit einer erfindungsgemäßen Düsenanordnung
- Fig. 4: eine weitere Frontalansicht auf eine Scheibe eines Kraftfahrzeugs mit einer erfindungsgemäßen Düsenanordnung
- Fig. 5: eine geschnittene Ansicht auf eine Scheibe eines Kraftfahrzeugs mit einer erfindungsgemäßen Düsenanordnung

In den Figuren werden gleiche oder funktionsgleiche Elemente mit dem gleichen Bezugszeichen versehen.

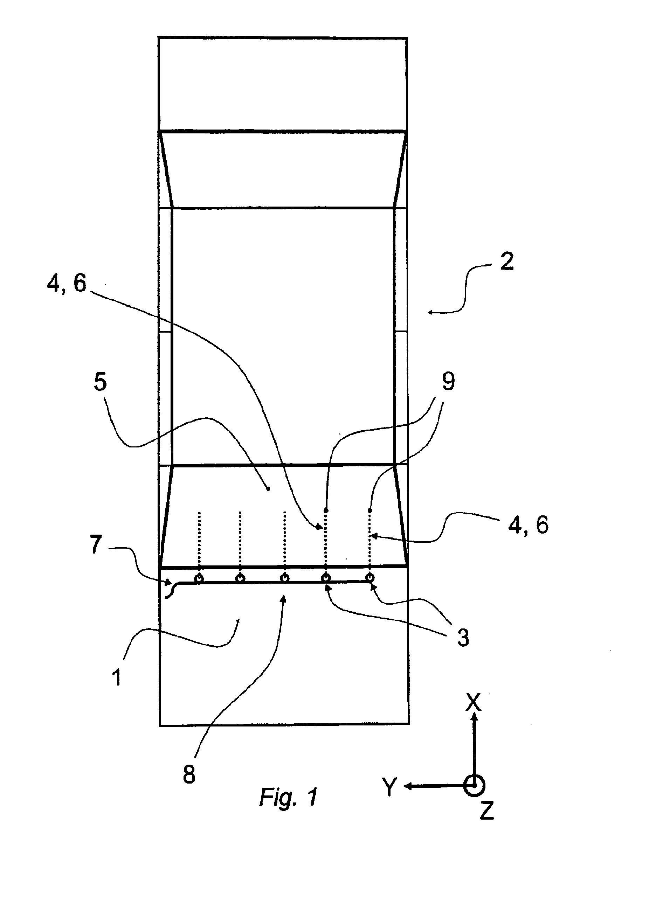

Die Fig. 1 zeigt eine Draufsicht von oben auf eine erfindungsgemäße Düsenanordnung 1, welche mit der Karosserie eines Fahrzeugs 2 verbunden ist. Eine Mehrzahl von Düsen 3 ist so zueinander angeordnet, dass die die Düsen 3 verlassenden Strahlen 6 des Wischfluids 4 jeweils innerhalb zueinander im Wesentlichen parallel ausgerichteter Ebenen liegen, so dass alle Strahlen 6 simultan in Richtung zur Fahrzeug-Längserstreckung X auf die Scheibe 5 ausgerichtet sind. Die Düsen 3 sind entlang einer sich im Wesentlichen quer zur Fahrzeug-Längserstreckung X in Fahrzeug-Quererstreckung Y erstreckenden Linie über eine Fluidleitung 7 verbunden und bilden eine Fluidleitungs-Düsenkette 8. Die Fluidleitung 7 ist mit einem hier nicht näher dargestellten Wischfluidreservoir verbunden. Nicht näher dargestellt ist ebenfalls, dass innerhalb dieser Fluidleitungs-Düsenkette 8 ein drahtförmiges Widerstandsheizelement 11 angeordnet ist. Die Düsen 3 sind dabei jeweils innerhalb einer Abzweigung der die Düsen 3 mit Wischfluid 4 versorgenden Fluidleitung 7 angeordnet. Der Abstand zwischen benachbarten Düsen 3 nimmt einen Wert von ca. 25 cm ein. Es sei darauf hingewiesen, dass alternativ die Düsen 3 selbstredend einzeln mit jeweils einer eigenen Fluidleitung verbunden sein können bzw. einzelne Düsenpaare durch einzelne Fluidleitungen mit Wischfluid 4 versorgt werden können.

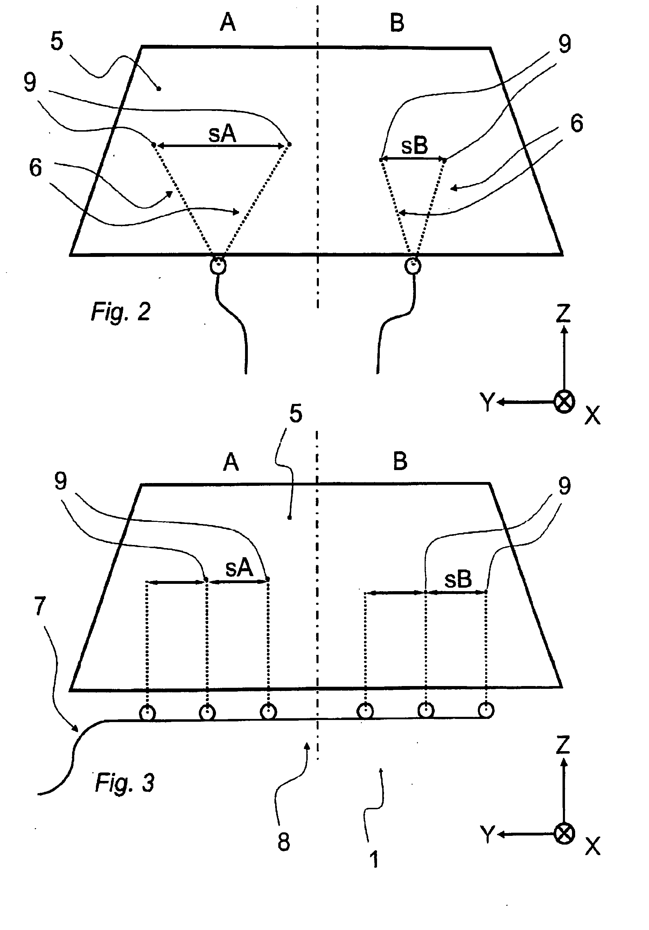

Die Fig. 2 zeigt eine Düsenanordnung 1 gemäß des Stands der Technik. Der innerhalb der Figur mit A bezeichnete Bereich der Scheibe 5 zeigt den Verlauf der Strahlen 6 des Wischfluids 4, welche die Düsen 3 verlassen, für den Fall, dass das Fahrzeug 2 sich nur mit einer geringen Geschwindigkeit oder gar nicht bewegt. Der Abstand sA definiert den Abstand der Auftreffpunkte 9 der Strahlen 6 für diesen Fall. Der ebenfalls in Fig. 2 dargestellte Bereich B der Frontalansicht der Scheibe 5 zeigt demgegenüber die Veränderung der Ausbreitungsrichtung der Strahlen 6 bei einer im Vergleich zu Bereich A erhöhten Geschwindigkeit und einem damit verbundenen erhöhten Fahrtwind. Erkennbar ist, dass sich der Spritzwinkel aufgrund des auf die Strahlen 6 einwirkenden Fahrtwinds verkleinert und sich in Folge dessen der Abstand sB und die Lage der Auftreffpunkte 9 zueinander auf der Scheibe 6 im Vergleich zum Abstand sA verändert bzw. verkleinert.

Demgegenüber zeigt die Fig. 3 eine erfindungsgemäße Düsenanordnung mit insgesamt 6 Düsen zur Applikation von Wischfluiden 4 auf die Scheibe 5 des Kraftfahrzeugs 2. Die Düsen 3 sind so zueinander angeordnet, dass die die Düsen 3 verlassenden Strahlen 6 des Wischfluids 4 jeweils innerhalb zueinander im Wesentlichen parallel ausgerichteter Ebenen liegen, so dass alle Strahlen 6 zugleich in Richtung zur Fahrzeug-Längserstreckung X auf die Scheibe 5 ausrichtbar sind. Der Einfluss des Fahrtwinds bei einer erhöhten Geschwindigkeit des Fahrzeugs 2 ist soweit minimiert, dass die Applikation des Wischfluids 4 auf die Scheibe 5 nur unwesentlich beeinflusst ist. Die Abstände sA und sB der Auftreffpunkte 9 der Strahlen 6 sind für niedrige Fahrgeschwindigkeiten (Bereich A) und erhöhte Fahrgeschwindigkeiten (Bereich B) weitgehend identisch. Die Düsen 3 sind als Punktstrahldüsen ausgebildet In diesem Ausführungsbeispiel sind die Düsen 3 über eine Halteschiene (nicht näher dargestellt) mit dem Kraftfahrzeug 2 verbindbar. Die Halteschiene kann alternativ als Fahrzeugblende ausgeführt sein.

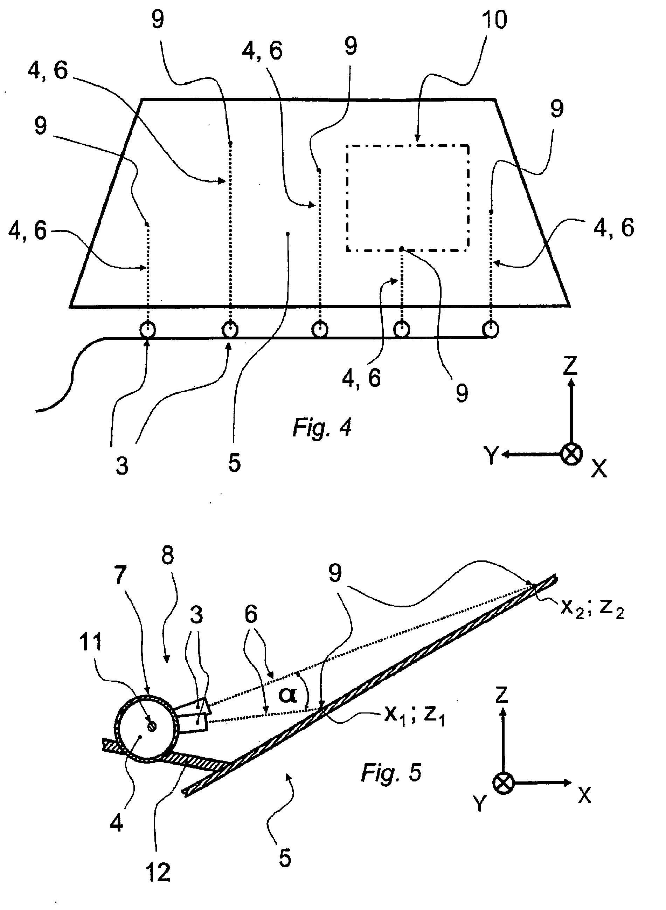

Die Fig. 4 zeigt eine Frontalansicht einer Scheibe 6 mit einer erfindungsgemäßen Düsenanordnung 1. Die Düsen 3 sind so zueinander ausgerichtet, dass die die Düsen 3 verlassenden Stahle 6 einen Winkel α zueinander einschließen, so dass die jeweiligen Auftreffpunkte 9 der Strahlen 6 auf der Scheibe 5 in der Fahrzeug-Höhenerstreckung Z voneinander abweichen. Die Düsen 3 sind dabei ferner so angeordnet, dass die Auftreffpunkte 8 der Strahlen 5 außerhalb eines A-Sichtbereichs 9 der Scheibe 5 liegen. Der Kraftfahrzeugführer wird in vorteilhafter Weise nicht in seiner Sicht nach außen beeinträchtigt.

Die Fig. 5 zeigt eine Ansicht einer erfindungsgemäßen Düsenanordnung 1 in einer Ansicht in Richtung der Fahrzeug-Quererstreckung Y gemäß Fig. 4. Die Düsen 3 sind so zueinander ausgerichtet, dass die die Düsen 3 verlassenden Stahle 6 einen Winkel α zueinander einschließen, so dass die jeweiligen Auftreffpunkte 9 der Strahlen 6 auf der Scheibe 5 in der Fahrzeug-Höhenerstreckung Z voneinander abweichen. Durch die Neigung der Scheibe 5 variieren die Auftreffpunkte 9 ebenfalls in ihrer Fahrzeug-Längserstreckung X. Durch den Winkel α ergeben sich für die einzelnen Düsen 3 aufgrund dessen Auftreffpunkte 9 mit voneinander abweichenden Koordinaten in X- und Z-Erstreckung. Die Düsen 3 sind entlang einer sich im Wesentlichen in Fahrzeug-Quererstreckung Y erstreckenden Linie über eine Fluidleitung 7 verbunden und bilden eine Fiuidleitungs-Düsenkette 8. Innerhalb der Fluidleitung 7 wird das Wischfluid 4 aus einem Reservoir zu den Düsen 3 transportiert. Innerhalb der Fluidleitungs-Düsenkette 8 ist ein Heizelement 11 angeordnet. Die Düsen 3 sind an einer Wasserkastenabdeckung 12 mit dem Kraftfahrzeug 2 verbunden. Alternativ ist es möglich die Düsen 3 mittels eines Halters oder mittels einer Halteschiene oder direkt an der Karosserie mit dem Kraftfahrzeug 2 zu verbinden.

## Patentansprüche

1. Düsenanordnung (1) für ein Kraftfahrzeug (2) mit mindestens zwei Düsen (3) zur Applikation von Wischfluiden (4) auf eine Scheibe (5) des Kraftfahrzeugs (1), **dadurch gekennzeichnet, dass** die Düsen (3) so zueinander angeordnet sind, dass die die Düsen (3) verlassenden Strahlen (6) des Wischfluids (4) jeweils Innerhalb zueinander im Wesentlichen parallel ausgerichteter Ebenen liegen, so dass alle Strahlen (6) in Richtung zur Fahrzeug-Längserstreckung (X) auf die Scheibe (5) ausrichtbar sind.

2. Düsenanordnung (1) für ein Kraftfahrzeug (2) nach Anspruch 1, **dadurch gekennzeichnet, dass** die Düsen (3) entlang einer sich im Wesentlichen quer zur Fahrzeug-Längserstreckung (X) erstreckenden Linie über eine Fluidleitung (7) verbunden sind und eine Fluidteitungs-Düsenkette (8) bilden.

3. Düsenanordnung nach Anspruch 2, **dadurch gekennzeichnet, dass** innerhalb der Fluidleitungs-Düsenkette (8) ein Heizelement (11) angeordnet ist.

4. Düsenanordnung (1) für ein Kraftfahrzeug (2) nach einem der vorstehenden Ansprüche, **dadurch gekennzeichnet, dass** die Düsen (3) ferner so zueinander ausgerichtet sind, dass die die Düsen (3) verlassenden Stahle (6) einen Winkel (α) zueinander einschließen, so dass die jeweiligen Auftreffpunkte (9) der Strahlen (6) auf der Scheibe (5) in der Fahrzeug-Höhenerstreckung (Z) voneinander abweichen.

5. Düsenanordnung (1) für ein Kraftfahrzeug (2) nach einem der vorstehenden Ansprüche, **dadurch gekennzeichnet, dass** die Düsen (3) jeweils innerhalb einer Abzweigung der Fluidleitung (7) angeordnet sind.

6. Düsenanordnung (1) für ein Kraftfahrzeug (2) nach einem der vorstehenden Ansprüche, **dadurch gekennzeichnet, dass** 3 bis 9, vorzugsweise 5 bis 7, weiter vorzugsweise 6 Düsen (3) vorgesehen sind.

7. Düsenanordnung (1) für ein Kraftfahrzeug (2) nach einem der vorstehenden Ansprüche, **dadurch gekennzeichnet, dass** der Abstand zwischen benachbarten Düsen (3) einen Wert zwischen 10 cm bis 50 cm, vorzugsweise 20 cm bis 40 cm, weiter vorzugsweise von 25 cm bis 35 cm einnimmt.

8. Düsenanordnung (1) für ein Kraftfahrzeug (2) nach einem der vorstehenden Ansprüche, **dadurch gekennzeichnet, dass** die Düsen (3) als Punktstrahldüsen und/oder als Kugelstrahldüsen ausgebildet sind.

9. Kraftfahrzeug (2) mit einer Düsenanordnung (1) nach einem der vorstehenden Ansprüche, **dadurch gekennzeichnet, dass** die Düsen (3) mittels eines Halters oder mittels einer Halteschiene oder an einer Wasserkastenabdeckung (12) oder direkt an der Karosserie mit dem Kraftfahrzeug (2) verbindbar sind.

10. Kraftfahrzeug (2) nach Anspruch 9 oder mit einer Düsenanordnung (1) nach einem der Ansprüche 1 bis 8, **dadurch gekennzeichnet, dass** die Düsen (3) so angeordnet sind, dass die Auftreffpunkte (9) der Strahlen (6) außerhalb eines A-Sichtbereiches (10) der Scheibe (5) liegen.
